# EUROPEAN PATENT APPLICATION

(11) **EP 1 906 539 A2**
(43) Date of publication of application: **02.04.2008**
(21) Application number: 07019025.1
(22) Date of filing: 27.09.2007
(51) Int. Cl.: H04B 1/00, H04B 7/185

(54) **Vocabluary recognition of analog transmissions in a wireless digital network**

(30) Priority: 29.09.2006 US 537457
(71) Applicant: Lockheed Martin Corporation, Bethesda, Maryland 20817 (US)
(72) Inventor: Fm, Bay, Sunnyvale, California 94087 (US); Heil, Daniel J., Los Gatos, California 95032 (US)
(74) Representative: Hirsch & Associés

(57) **Abstract**

Methods and systems in which vocabulary recognition enables routing of analog transmissions over digital networks are provided. In one embodiment, a method (200) of delivering analog transmissions over a digital network includes receiving (208) an analog transnnission including source identifying vocabulary associated with a source of the transmission, converting (210) the received analog transmission to a digitized transmission, analyzing (214) the digitized transmission to obtain the source identifying vocabulary therefrom, retrieving (220) routing information based on the source identifying vocabulary, buffering (212) the digitized transmission during the analyzing and retrieving steps, associating (222) the routing information with the buffered digitized transmission, and delivering (224) the buffered digitized transmission over the digital network according to the routing information associated therewith.

## Description

### FIELD OF THE INVENTION

The present invention relates generally to accommodating analog voice transmissions in digital communication networks, and more particularly to routing and delivery of analog transmissions within digital communication networks.

### BACKGROUND OF THE INVENTION

At present, voice communications between airborne vehicles and ground stations such as, for example, between airplanes and air traffic control centers, is generally provided over analog wireless very high frequency (VHF) broadcasts using 25 KHz bandwidth assignments (25KHz analog channels). Public safety and emergency response communication systems such as, for example, systems employed by police, fire, and emergency medical personnel and their associated dispatchers also often employ similar analog voice communication channels over a variety of frequencies. Given the large number of analog channels assigned for such uses, a substantial amount of spectrum is occupied and underutilized.

Digital communication systems can provide enhanced capabilities as compared with existing analog air-to-ground/ground-to-air and public safety/emergency response communication systems such as, for example, an ability to accommodate more system users and improved transmission clarity and enhanced information transmission capabilities. Thus, there may be a desire to replace such analog systems with digital systems, but due to associated costs and other constraints it may not be practical to promptly end the use of such analog voice communication systems and require that digital voice communication systems immediately be employed by all users within a geographic region (e.g., a national or international air traffic control corridor, an air traffic control region, an airport, a county, or a city). In this regard, the ground control or public safety/emergency response dispatch communication system equipment may be upgraded to digital while many aircraft radios and public safety/emergency response personnel radios remain analog. This may create difficulties in directing analog voice transmissions from older analog equipment to the appropriate destination within digital ground control or public safety/emergency response dispatch networks.

### SUMMARY OF THE INVENTION

Accordingly, the present invention provides for the routing of analog transmissions over a digital network to desired destinations where source identifying vocabulary is included in the analog transmissions. The analog transmissions are processed to obtain the source identifying vocabulary therefrom and a destination on the digital network for the transmission is obtained using the source identifying vocabulary. One advantage provided by the present invention is that existing analog equipment can continue to be utilized while transitioning to an all digital communications system. Another advantage of the present invention is that information included in the analog transmission is utilized and no additional information regarding its source needs to be added to the transmission prior to transmitting it from the source.

According to one aspect of the present invention, a method of delivering analog transmissions over a digital network includes receiving an analog transmission including source identifying vocabulary associated with a source of the transmission. The received analog transmission is converted to a digital format. The digitized transmission is analyzed to obtain the source identifying vocabulary therefrom. Routing information is retrieved based on the source identifying vocabulary. The digitized transmission is buffered during the steps of analyzing and retrieving, and the routing information is associated with the buffered digitized transmission. Thereafter, the buffered digitized transmission is delivered over the digital network according to the routing information associated therewith.

The analog transmission may, for example, be received over a wireless communications channel such as a radio channel. The source of the analog transmission may, for example, be an individual onboard an aircraft (e.g., the pilot), or, for example, a public safety officer or an emergency responder (e.g., a police officer, firefighter, emergency medical technician). To obtain the source identifying vocabulary, the digitized transmission may be processed with a voice recognition algorithm. The voice recognition algorithm may be optimized to recognize a limited range of source identifying vocabulary corresponding with at least one standardized format for an activity such as, for example, where the activity is flying an aircraft, aircraft tail numbers and aircraft operator/flight number combinations. The routing information may comprise a network address that is associated with the buffered digitized transmission by concatenating it with the buffered digitized transmission.

According to another aspect of the present invention, a communication system that delivers analog transmissions over a digital network includes an analog transmitter, an analog receiver, and an analog transmission processing unit. The analog transmitter is operable to transmit an analog transmission including source identifying vocabulary associated with a source of the transmission. The analog receiver is operable to receive the analog transmission. The analog transmission processing unit is communicatively coupled with the analog receiver and the digital network and is operable to perform a number of activities. In this regard, the analog transmission processing unit converts the received analog transmission to a digitized transmission, analyzes the digitized transmission to obtain the source identifying vocabulary therefrom, retrieves routing information based on the source identifying vocabulary, buffers the digitized transmission while analyzing the digitized transmission and retrieving the routing information, and associates the routing information with the buffered digitized transmission. In this manner, the digitized transmission corresponding with the transmitted and received analog transmission is prepared for routing and delivery to a destination via the digital network.

The analog transmitter and analog receiver may, for example, be an analog radio transmitter and an analog radio receiver, respectively. The source of the analog transmission may, for example, be an individual onboard an aircraft (e.g., the pilot), or, for example, a public safety officer or an emergency responder (e.g., a police officer, firefighter, or emergency medical technician). The analog transmission processing unit may analyze the digitized transmission by implementing a voice recognition algorithm that processes the digitized transmission to recognize the source identifying vocabulary. In this regard, the voice recognition algorithm implemented by the analog transmission processing unit may be optimized to recognize a limited range of source identifying vocabulary corresponding with one or more standardized formats for an activity such as, for example, aircraft tail numbers and aircraft operator/flight number combinations. The routing information may be a network address, and the analog transmission processing unit may associate the routing information with the buffered digitized transmission by concatenating the network address with the buffered digitized transmission.

These and other aspects and advantages of the present invention will be apparent upon review of the following Detailed Description when taken in conjunction with the accompanying figures.

### DESCRIPTION OF THE DRAWINGS

For a more complete understanding of the present invention and further advantages thereof, reference is now made to the following Detailed Description, taken in conjunction with the drawings, in which:
FIG. 1 shows one embodiment of communications system wherein analog transmissions are received and routed over a digital network;
FIG. 2 shows one embodiment of a method of directing an analog transmission over a digital network;
FIG. 3 shows another embodiment of communications system wherein analog transmissions are received and routed over a digital network; and
FIG. 4 shows another embodiment of a method of directing an analog transmission over a digital network.

### DETAILED DESCRIPTION

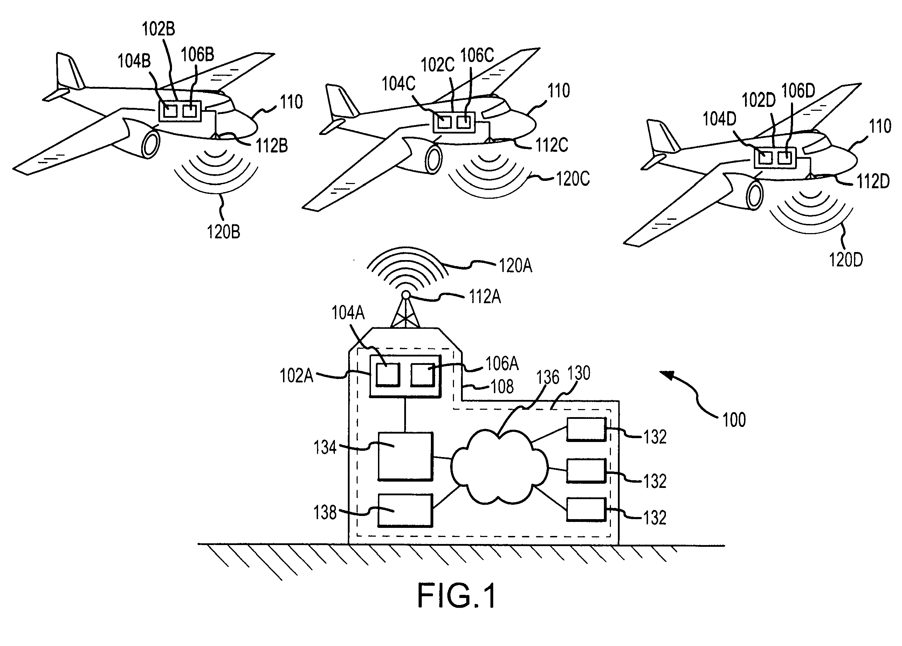

FIG. 1 is a schematic representation of one embodiment of communications system 100 in which analog transmissions are received and routed over a digital network. The system 100 includes several radios 102A, 102B, 102C, 102D. The system 100 is illustrated in the context of an air-traffic control application wherein the pilots of a plurality of aircraft 110 within an airspace communicate with ground controllers at an air traffic control center 108 via the system 100. The system 100 may also be appropriate for use in other contexts as well including, for example, public safety officers or other emergency responders (e.g., police, fire, emergency medical) communicating with dispatchers at a public safety or emergency response coordination office (e.g., a dispatch center). Additionally, other embodiments of the system may include fewer than four radios or more than four radios, as well as multiple radios at the air traffic control center and additional air traffic control centers each including one or more radios.

In the present embodiment, the radios 102A-102D are configured to transmit and receive analog transmissions. In this regard, the radios 102A-102D are coupled to respective antennas 112A-112D. Analog transmission 120A is generated by a transmitter portion 104A of the radio 102A at the air traffic control center 108 and is broadcast from the air traffic control center 108 via antenna 112A. Analog transmission 120A may include voice communications from an air traffic controller for the pilot or pilots of one or more of the airplanes 110. In this regard, where the air traffic controller is using a digital air traffic control system, the air traffic controller's voice communications may initially be directed to transmitter portion 104A in the form of a digital signal that then undergoes a digital-to-analog conversion prior to transmitter portion 104A generating analog transmission 120A corresponding therewith. Analog transmission 120A is collected by the antennas 112B-112D onboard the airplanes 110 and received by receiver portions 106B-106D of the radios 102B-102D onboard the airplanes 110. Transmitter portions 104B-104D of the radios 102B-102D onboard the airplanes 110 generate respective analog transmissions 120B-120D that are broadcast via respective antennas 112B-112D onboard the airplanes 110. Each analog transmission 120B-120D may include voice communications from the pilot of each respective airplane 110 for one or more air traffic controllers responsible for directing air traffic with the airspace controlled by the air traffic control center 108. Analog transmissions 120B-120D are received by receiver portion 106A of the radio 102A at the ground control station 108.

The radio 102A at the air traffic control center 110 may be part of an air traffic control system 130. Air traffic control system 130 may include one or more air controller stations 132, an analog transmission processing unit 134 and a digital network 136 connecting the air controller stations 132 with the analog transmission processing unit 134. Digital network 136 may also connect the air traffic control center 108 with one or more additional air traffic control centers (not shown) and with other facilities (not shown). Radio 102A is communicatively coupled with the analog transmission processing unit 134. Air traffic control system 130 may also include a digital radio 138 that transmits and receives digital transmissions (not shown) via antenna 112A (or a separate antenna) to and from one or more digital radios (not shown) onboard one or more additional airplanes (not shown) within the airspace controlled by the air traffic control center 108. Digital radio 138 is also connected via digital network 136 to the air controller stations 132. Digital transmissions received by the digital radio 138 may include digital information identifying the airplane from which such received transmissions originated. The identifying digital information included in a received digital transmission may be used by the digital network 136 to route such received digital transmissions via the digital network 136 to the appropriate air traffic control station 134 at which the air traffic controller currently responsible for the originating airplane is stationed.

When receiver portion 106A of radio 102A receives one of the analog transmissions 120B-120D from one of the airplanes 110, the received analog transmission is directed to the analog transmission processing unit 134. Analog transmission processing unit 134 converts the received analog transmission to a corresponding digital transmission and processes the corresponding digital transmission to obtain information included in the received analog transmission identifying the originating source of the transmission (e.g., identifying the airplane 110 from which the analog transmission was transmitted). The analog transmission processing unit 134 uses the source identifying information to determine which of the air controller stations 132 the corresponding digital transmission should be directed to via the digital network 136 (e.g., the air controller station 132 at which the air traffic controller responsible for the originating airplane 110 is seated). The corresponding digital transmission is routed through the digital network 136 to the appropriate air controller station 132.

Where communications between the air traffic control center 108 and the airplanes 110 are bi-directional, the analog transmission processing unit 134 may also receive a digital signal from any one of the air controller stations 132 via the digital network 136 and convert it to an analog signal for transmission by the analog transmitter portion 104A of radio 102A.

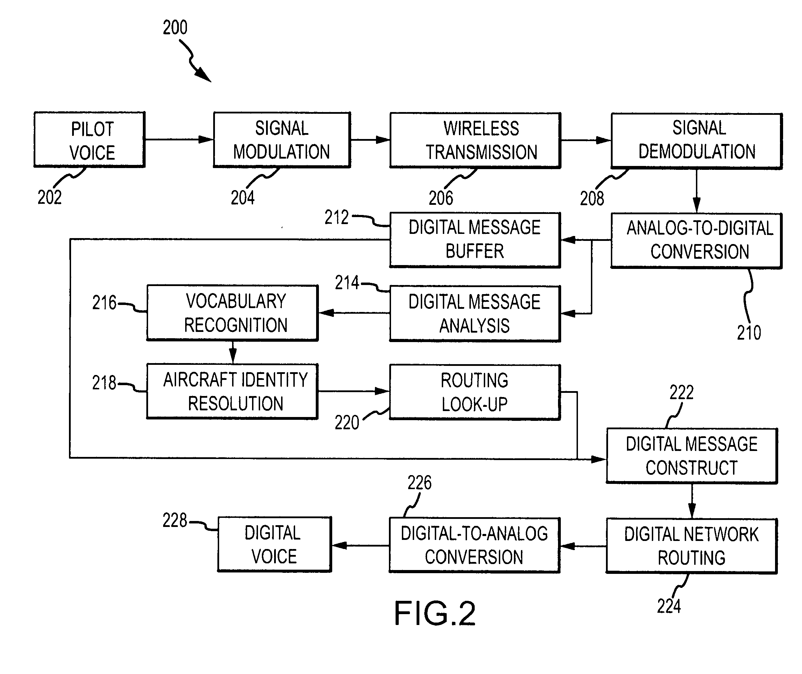

FIG. 2 shows the steps involved in one embodiment of a method 200 of directing an analog transmitted voice communication from an aircraft pilot or the like to a ground controller via a digital network. The method 200 may be employed in connection with a system 100 such as shown in FIG. 1. The method 200 of FIG. 2 can also be employed in connection with other communication systems where analog voice transmissions are to be received and routed via a digital network to a destination.

The method 200 begins with receiving 202 a vocal communication from an individual such as, for example, the pilot of the aircraft. The vocal communication may be received 202 using, for example, a microphone. Although the vocal communication may be referred to herein as the pilot voice communication (or simply pilot voice), the vocal communication may in general be from any individual onboard the aircraft (e.g., the pilot, co-pilot, navigator, etc.).

The pilot voice will typically include specific vocabulary (e.g., words, letters, numbers, or a combination thereof) identifying the aircraft. For example, the pilot's voice may include an aircraft tail number (e.g. "N12345") or a combination of an aircraft operator name and flight number (e.g., "ABC Air 101") as part of the communication. The vocabulary identifying the aircraft included in the pilot voice may take many forms other than an aircraft tail number or aircraft operator/flight number combination, but utilizing one or more standardized formats facilitates subsequent processing of the pilot voice communication for the source identifying vocabulary. The source identifying vocabulary may be anywhere in the pilot voice communication but will often occur at the beginning or end of the communication (e.g., "ABC Air 101 request permission to land" or "Acknowledge runway change N12345").

The pilot voice is modulated 204 onto a carrier signal and the modulated carrier signal is transmitted 206. In the present embodiment, the modulated carrier signal is transmitted 206 wirelessly (e.g., typically as a radio signal although free-space optical or other wireless technologies may be utilized). The wirelessly transmitted pilot voice communication is an example of an analog voice transmission.

The wireless analog voice transmission is received 208 and demodulated to obtain the pilot voice communication from the modulated carrier signal. In the present embodiment, the wireless analog voice transmission is received 208 and demodulated at a fixed location ground station. However, in other embodiments, it may be received and demodulated at a mobile ground platform (e.g., a truck, trailer or other moveable ground vehicle), a seaborne platform (e.g., a ship or submarine), an airborne platform (e.g., another aircraft) or a space platform (e.g., a satellite or space station). Thereafter, the demodulated pilot voice communication is converted 210 from an analog signal to a digital signal to obtain a digitized version of the pilot voice communication. The digitized pilot voice communication is an example of a digitized voice transmission corresponding with an analog voice transmission. In another embodiment, it is also possible to convert the received wireless analog voice transmission to digital and then digitally demodulate the pilot voice from the received and converted wireless transmission to obtain a digitized voice transmission.

Once the digitized voice transmission is obtained, the digitized voice transmission is buffered 212 (e.g., in a digital memory) while a copy of the digitized voice transmission is analyzed 214. In this regard, it is also possible to buffer a copy of the digitized voice transmission while the digitized voice transmission is analyzed 214, and in general the digitized voice transmission and its copy are interchangeable since it is possible to make a perfect copy of the digitized voice transmission. Thus, the digitized voice transmission or its copy may be used interchangeably where appropriate.

The digitized voice transmission is analyzed 214 to obtain the source identifying vocabulary from the pilot voice communication. In this regard, the digitized voice transmission may be processed 216 using a voice recognition algorithm. The voice recognition algorithm may, for example, be implemented in computer software executable by a computer processor. Voice recognition processing step 216 may also be referred to herein as vocabulary recognition processing step 216. When processing 216 the digitized voice transmission using a voice recognition algorithm, anticipated characteristics of the pilot voice communication may be utilized to gain efficiencies in the processing 216. In this regard, a limited vocabulary may be utilized corresponding with one or more standardized formats for the source identifying vocabulary. For example, the voice recognition algorithm may be programmed / trained to recognize only aircraft tail numbers or aircraft operator/flight number phrases from one or more lists of such information and all other words in the digitized voice transmission may be ignored. Further, the digitized voice transmission may be divided into a number of portions and processing 216 of the digitized voice transmission may begin with a first portion of the digitized voice transmission. If source identifying vocabulary is not found in the first portion, an end portion of the digitized transmission may analyzed, and if source identifying vocabulary is not found in the end portion, then one or more middle portions may be analyzed. Additionally, processing 216 of the digitized voice transmission may be ended once the source identifying vocabulary is obtained and the remainder of the digitized voice transmission ignored.

Based on the recognized vocabulary from voice recognition processing step 216, the aircraft identity is resolved 218. In this regard, the identified vocabulary may be used to query one or more databases including vocabulary word and / or phrase entries cross-referenced with corresponding aircraft identifier entries. The vocabulary word and / or phrase entries included in the database(s) used in aircraft identity resolution step 218 may include the same aircraft tail numbers or aircraft operator/flight number phrases used as the limited vocabulary in the voice recognition processing step 216. For example, where the recognized vocabulary is "N12345", such recognized vocabulary may be cross-referenced with an aircraft identified as "ABC Airlines Flight Number 101", or where the recognized vocabulary is "ABC Air 101", such recognized vocabulary may also be cross-referenced with an aircraft identified as "ABC Airlines Flight Number 101 ".

After the aircraft identity is resolved, routing information is retrieved 220 based on the identity of the aircraft. The routing information indicates a destination for the digitized voice transmission buffered in buffering step 212. In this regard, the routing information may be a network address within a digital network associated with a particular air traffic control station manned by a controller responsible for the identified aircraft. The routing information may be retrieved from one or more databases of network addresses that are cross-referenced against aircraft identities. The database(s) of network addresses and aircraft identifiers may be static over a given time period (e.g., digitized voice transmissions from a particular aircraft are always routed to the same station within the digital network) or dynamic over a given time period (e.g., digitized voice transmissions from a particular aircraft are routed to different destinations depending upon factors such as aircraft load on a given station within the digital network).

After the routing information is retrieved, such routing information is associated 222 with the buffered digitized voice transmission. Routing information associating step 220 may also be referred to herein as digital message construct step 220. In this regard, where the routing information is a network address associated with the destination, a digital message may be constructed that includes the routing information by concatenating the network address with the digitized voice transmission. For example, a string of one or more bits defining the network address may be added to the start or end of the string of bits comprising the digitized voice transmission. Where the digitized voice transmission is divided into a plurality of packets for transmission within a packet-switched digital network, the network address may be concatenated with each packet included in the digitized voice transmission. For example, a string of one or more bits defining the network address may be added to the start or end of each packet of bits comprising the digitized voice transmission. If not already included in the digitized voice transmission or one or more packets comprising the digitized voice transmission, error checking and /or parity bit(s) can also be added to the digitized voice transmission or one or more packets comprising the digitized voice transmission during the digital message construction step 222.

The buffered digitized voice transmission is routed 224 within digital network using the associated routing information. In this regard, the buffered digitized voice transmission or each packet comprising the buffered digitized voice transmission is routed to the destination retrieved in step 220. To speed delivery of the buffered digitized voice transmission to the destination when the buffered digitized voice transmission is divided into a plurality of packets, routing 224 of early packets may be undertaken before association 222 of routing information with later packets is completed.

When the digitized voice transmission reaches its destination, the digitized voice transmission is converted 226 into a voice signal. In this regard, the routing information (and any parity and / or error checking bits) may be stripped from the digitized voice transmission before converting 226 the digitized voice transmission. Where the digitized voice transmission comprises a number of packets, the packets may be buffered until all packets have been received before converting 226 or conversion 226 may begin on earlier packets before later packets have arrived.

The voice signal is output 228 on an output device (e.g., a speaker). In this regard, the voice signal is an analog representation of the digitized voice transmission which is in turn a digital representation of the pilot's vocal communication. Thus, in addition to the words included in the pilot's voice communication, the voice signal that is output 228 includes original features of the pilot voice such as accent, pitch, tone, inflection, and cadence. Although possible to generate a synthesized voice in place of the voice signal, outputting 228 a non-synthesized voice signal is advantageous since the voice signal that is output includes such additional features and is therefore a more accurate representation of the original pilot's voice communication.

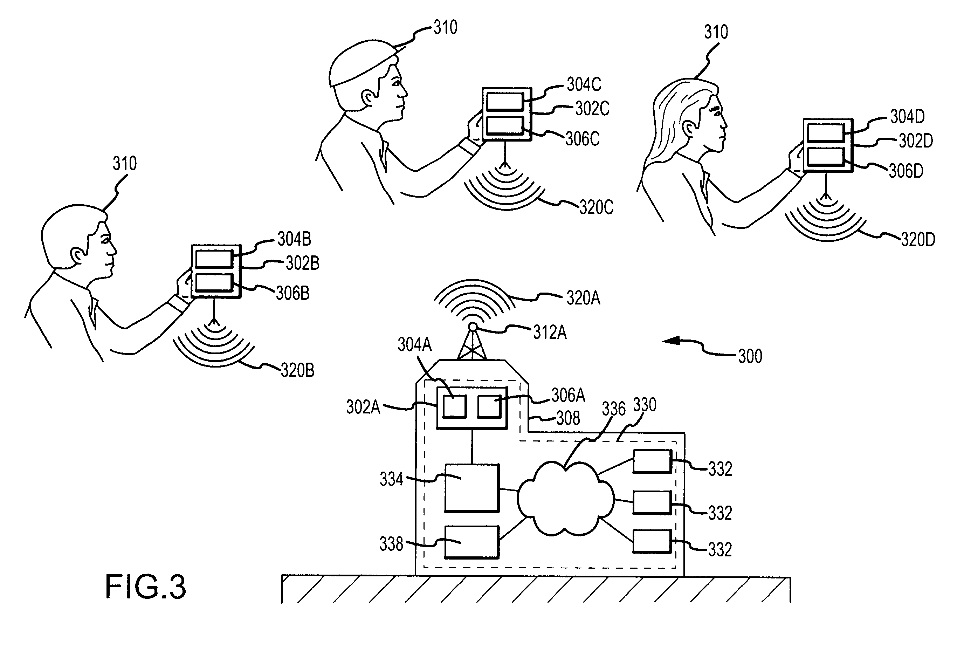

FIG. 3 is a schematic representation of another communications system 300 configured for receiving and routing analog transmissions in a digital network. The system 300 includes several analog radios 302A, 302B, 302C, 302D. The system 300 is illustrated in the context of public safety / emergency responder communications. In this regard, one of the radios 302A is located at, for example, a dispatch center 308 and three of the radios 302B, 302C, 302D are associated with, for example, individual public safety/emergency responder personnel 310. Dispatch center 308 may, for example, be fixed location or mobile (e.g., within a mobile command vehicle). Radios 302B-302D may, for example, be handheld radios carried by police officers, fire fighters or emergency medical technicians and / or radios installed in police cruisers, fire trucks, ambulances or the like. Radio 302A may be referred to herein as a dispatch radio 302A, and radios 302B-302D may be referred to herein as responder radios 302B-302D. Other embodiments of the system may include more than the one dispatch radio 302A and fewer or more than the three responder radios 302B-302D.

In the present embodiment, radios 302A-302D, including the transmitter 304A-304D and receiver 306A-306D portions thereof, are configured to transmit and receive analog transmissions. In this regard, the radios 302A-302D are coupled to respective antennas 312A-312D. Analog transmission 320A is generated by the transmitter portion 304A of the dispatch radio 302A and is broadcast from the dispatch center 308 via antenna 312A. Analog transmission 320A may include voice communications from a dispatcher or other personnel at the dispatch center 308 for individual public safety/emergency responder personnel. In this regard, where the dispatcher is using a digital dispatch communication system, the dispatcher's voice communications may initially be directed to transmitter portion 304A in the form of a digital signal that then undergoes a digital-to-analog conversion prior to transmitter portion 304A generating analog transmission 320A, corresponding therewith. Analog transmission 302A is collected by the antennas 312B-312D coupled to the responder radios 302B-302D and received by the receiver portions 306B-306D thereof.

The transmitter portions 304B-304D of the responder radios 302B-302D generate respective analog transmissions 320B-320D that are broadcast via respective antennas 312B-312D coupled thereto. Each analog transmission 320B-320D may include respective voice communications from respective public safety / emergency responder personnel 310 for one or more dispatchers or other personnel at the dispatch center 308.

The dispatch radio 302A may be part of a public safety / emergency response dispatch system 330. Public safety / emergency response dispatch system 330 may include one or more dispatcher stations 332, an analog transmission processing unit 334, and a digital network 336 connecting dispatcher stations 332 with the analog transmission processing unit 334. Digital network 336 may also connect the dispatch center 308 with one or more additional dispatch centers (not shown), and with other facilities (not shown). Dispatch radio 302A is communicatively coupled with the analog transmission processing unit 334.

Public safety / emergency response dispatch system 330 may also include a digital dispatch radio 338 that transmits and receives digital transmissions (not shown) via antenna 312A (or a separate antenna) to and from one or more digital responder radios (not shown) utilized by one or more public safety / emergency responder personnel. The digital dispatch radio 338 may also be connected via digital network 336 to the dispatcher stations 332. Digital transmissions received by the digital dispatch radio 338 may include digital information identifying the originating digital responder radio source of such received digital transmissions. The source identifying digital information included in a received digital transmission may be used by the digital network 336 to route such received digital transmission via the digital network 336 to the appropriate dispatcher station 332 at which a dispatcher or other personnel responsible for communicating with the individual public safety / emergency responder personnel operating the originating digital responder radio source.

When receiver portion 306A of the dispatch radio 302A receives one of the analog transmissions 320B-320D from one of the responder radios 302B-302D, the received analog transmission is directed to the analog transmission processing unit 334 coupled to the dispatch radio 302A. The analog transmission processing units 334 converts the analog transmission received thereby to a corresponding digital transmission and processes the corresponding digital transmission to obtain information included in the received analog transmission identifying the originating source of the transmission (e.g., identifying the individual public safety / emergency responder personnel operating the responder radio 302B-302D from which the analog transmission was transmitted). The analog transmission processing unit 334 uses the source identifying information to determine which of the dispatcher stations 332 the corresponding digital transmission should be directed to via the digital network 336 (e.g., to the dispatcher station 332 at which the dispatcher responsible for communicating with the public safety / emergency responder personnel 310 is located). The corresponding digital transmission is routed through the digital network 336 to the appropriate dispatcher station 136. In this manner, the appropriate dispatchers receive voice communications from the public safety / emergency responder personnel.

Where communications between the dispatch system 330 and the public safety/emergency responder personnel 310 are bi-directional, the analog transmission processing unit 334 may also receive a digital signal from any one of the dispatch stations 332 via the digital network 336 and convert it to an analog signal for transmission by the analog transmitter portion 304A of dispatch radio 302A.

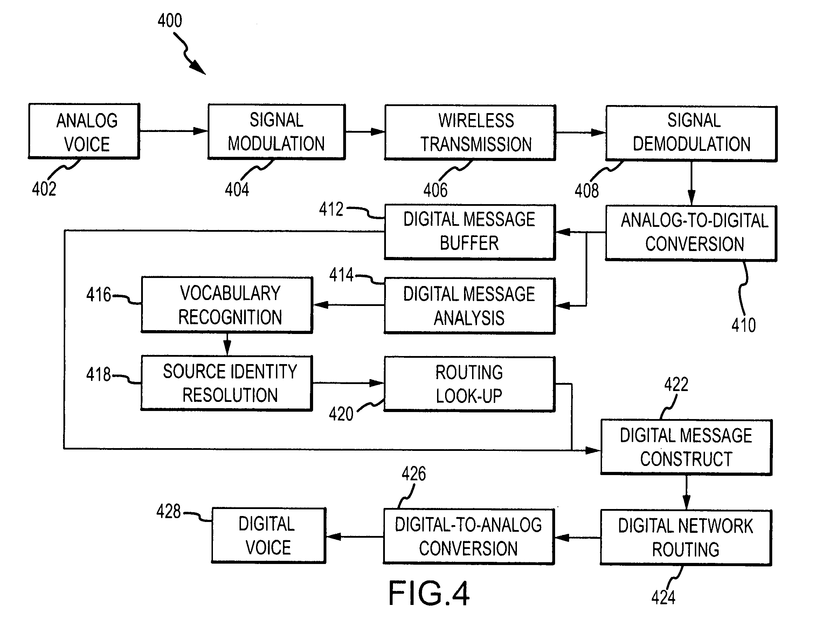

FIG. 4 shows the steps involved in one embodiment of a method 400 of directing an analog transmitted voice communication from an individual such as, for example, a public safety officer or an emergency responder to another individual such as, for example, a dispatcher via a digital network. The method 400 may be employed in connection with a public safety / emergency response communication system 200 such as shown in FIG. 2. The method 400 of FIG. 4 can also be employed in connection with other communication systems where analog voice transmissions are to be received and routed via a digital network to a destination. The method 400 of FIG. 4 represents a more generalized application of the method illustrated in FIG. 2.

The method 400 begins with receiving 402 a voice communication from the individual using, for example, a microphone. The voice communication may include vocabulary (e.g., words, letters, numbers, or a combination thereof) identifying the speaker. For example, a police officer, fire fighter, or emergency medical technician may include his or her name and / or a vehicle number as part of their communication. Although the vocabulary identifying the individual included in the voice communication may take many forms, persuading users to adopt one or more standardized formats in advance of implementing the method 400 facilitates subsequent processing of the voice communication for the source identifying vocabulary. The source identifying vocabulary may be anywhere in the voice communication but will often occur at the beginning or end of the communication (e.g., "Engine 1 responding" or "Proceeding to crime scene Smith over").

The voice communication is modulated 404 onto a carrier signal and the modulated carrier signal is transmitted 406. In the present embodiment, the modulated carrier signal is transmitted 406 wirelessly (e.g., typically as a radio signal although free-space optical or other wireless technologies may be utilized). In other embodiments, the modulated carrier signal may be transmitted using a non-wireless path or even a combination of wireless and non-wireless paths.

The wireless analog voice transmission is received 408 and demodulated to obtain the voice communication from the modulated carrier signal. Thereafter, the demodulated voice communication is converted 410 from an analog signal to a digital signal to obtain a digitized version of the voice communication. The digitized voice communication corresponds with the original analog voice transmission. In another embodiment, it is also possible to convert the received wireless analog voice transmission to digital and then digitally demodulate the voice communication from the received and converted wireless transmission to obtain a digitized voice transmission corresponding with the original analog voice transmission.

Once the digitized voice transmission is obtained, the digitized voice transmission is buffered 412 while a copy of the digitized voice transmission is analyzed 414. In this regard, it is also possible to buffer a copy of the digitized voice transmission while the digitized voice transmission is analyzed 414, and in general the digitized voice transmission and its copy are interchangeable since it is possible to make a perfect copy of the digitized voice transmission. Thus, the digitized voice transmission or its copy may be used interchangeably where appropriate.

The digitized voice transmission is analyzed 414 to obtain the source identifying vocabulary from the voice communication. In this regard, the digitized voice transmission may be processed 416 using a voice recognition algorithm. Voice recognition processing step 416 may also be referred to herein as vocabulary recognition processing step 416. When processing 416 the digitized voice transmission using a voice recognition algorithm, anticipated characteristics of the voice communication may be utilized to gain efficiencies in the processing 416. In this regard, a limited vocabulary may be utilized corresponding with one or more standardized formats for the source identifying vocabulary. For example, the voice recognition algorithm may be programmed / trained to recognize only the names of police officers, fire fighters, emergency medical responders and their associated vehicle numbers working in a geographic region covered by a communication system in which the method 400 is implemented. Further, the digitized voice transmission may be divided into a number of portions and processing 416 of the digitized voice transmission may begin with a first portion of the digitized voice transmission. If source identifying vocabulary is not found in the first portion, an end portion of the digitized transmission may analyzed, and if source identifying vocabulary is not found in the end portion, then one or more middle portions may be analyzed. Additionally, processing 316 of the digitized voice transmission may be ended once the source identifying vocabulary is obtained and the remainder of the digitized voice transmission ignored.

Based on the recognized vocabulary from voice recognition processing step 416, the identity of the source of the voice transmission is resolved 418. In this regard, the source identified vocabulary may be used to query one or more databases including vocabulary word and / or phrase entries cross-referenced against corresponding individual source name entries. The vocabulary word and / or phrase entries included in the database(s) used in source identity resolution step 418 may include the same vocabulary used as the limited vocabulary in the voice recognition processing step 416.

After the identity of the source is resolved, routing information is retrieved 420 based on the source identity. The routing information indicates a destination for the digitized voice transmission buffered in buffering step 412. In this regard, the routing information may be a network address within a digital network connecting a receiver of the wireless analog transmission with an output device associated with one or more individuals to whom the voice communication is directed. The routing information may be retrieved from one or more databases of network addresses that are associated with output devices connected to the digital network that are cross-referenced against corresponding source identities. The database(s) of network addresses and source identities may be static over a given time period (e.g., digitized voice transmissions from a particular source are always routed to the same output device station within the digital network) or dynamic over a given time period (e.g., digitized voice transmissions from a particular source are routed to different destinations).

After the routing information is retrieved, such routing information is associated 422 with the buffered digitized voice transmission. Routing information associating step 420 may also be referred to herein as digital message construct step 420. In this regard, where the routing information is a network address associated with the destination, a digital message may be constructed that includes the routing information by concatenating the network address with the digitized voice transmission. For example, a string of one or more bits defining the network address may be added to the start or end of the string of bits comprising the digitized voice transmission. Where the digitized voice transmission is divided into a plurality of packets for transmission within a packet-switched digital network, the network address may be concatenated with each packet included in the digitized voice transmission. For example, a string of one or more bits defining the network address may be added to the start or end of each packet of bits comprising the digitized voice transmission. If not already included in the digitized voice transmission or one or more packets comprising the digitized voice transmission, error checking and/or parity bit(s) can also be added to the digitized voice transmission or one or more packets comprising the digitized voice transmission in the digital message construction step 422.

The buffered digitized voice transmission is routed 424 within digital network using the associated routing information. In this regard, the buffered digitized voice transmission or each packet comprising the buffered digitized voice transmission is routed to the destination retrieved in step 420. To speed delivery of the buffered digitized voice transmission to the destination when the buffered digitized voice transmission is divided into a plurality of packets, routing 424 of early packets may be undertaken before association 422 of routing information with later packets is completed.

When the digitized voice transmission reaches its destination, the digitized voice transmission is converted 426 into a voice signal. In this regard, the routing information (and any parity and/or error checking bits) may be stripped from the digitized voice transmission before converting 426 the digitized voice transmission. Where the digitized voice transmission comprises a number of packets, the packets may be buffered until all packets have been received before converting 426 or conversion 426 may begin on earlier packets before later packets have arrived.

The voice signal is output 428 on an output device (e.g., a speaker). In this regard, the voice signal is an analog representation of the digitized voice transmission which is in turn a digital representation of the original vocal communication. Thus, in addition to the words included in the voice communication, the voice signal that is output 428 includes original features of the speaker's voice such as accent, pitch, tone, inflection, and cadence. Although possible to generate a synthesized voice in place of the voice signal, outputting 428 a non-synthesized voice signal is advantageous since the voice signal that is output includes such additional features and is therefore a more accurate representation of the original speaker's voice communication.

While various embodiments of the present invention have been described in detail, further modifications and adaptations of the invention may occur to those skilled in the art. However, it is to be expressly understood that such modifications and adaptations are within the spirit and scope of the present invention.

## Claims

1. A method of delivering analog transmissions over a digital network, said method comprising the steps of:
receiving an analog transmission including source identifying vocabulary associated with a source of the transmission;
converting the received analog transmission to a digitized transmission;
analyzing the digitized transmission to obtain the source identifying vocabulary therefrom;
retrieving routing information based on the source identifying vocabulary;
buffering the digitized transmission during said steps of analyzing and retrieving;
associating the routing information with the buffered digitized transmission; and
delivering the buffered digitized transmission over the digital network according to the routing information associated therewith.

2. The method of Claim 1 wherein in said step of receiving, the analog transmission is received over a wireless communications channel.

3. The method of Claim 1 wherein the source of the analog transmission is an individual onboard an aircraft.

4. The method of Claim 1 wherein the source of the analog transmission is a public safety officer or an emergency responder.

5. The method of Claim 1 wherein said step of analyzing the digitized transmission comprises:
processing the digitized transmission with a voice recognition algorithm.

6. The method of Claim 5 wherein said step of processing includes:
optimizing the voice recognition algorithm to recognize a limited range of source identifying vocabulary corresponding with at least one standardized format for an activity.

7. The method of Claim 6 wherein the limited range of standardized source identifying vocabulary includes aircraft tail numbers and aircraft operator / flight number combinations.

8. The method of Claim 1 wherein the routing information comprises a network address, and wherein said step of associating comprises:
concatenating the network address with the buffered digitized transmission.

9. The method of Claim 8 wherein the buffered digitized transmission comprises a plurality of packets and wherein, in said step of concatenating, the network address is concatenated with each packet.

10. A communication system that delivers analog transmissions over a digital network, said system comprising:
an analog transmitter operable to transmit an analog transmission including source identifying vocabulary associated with a source of the transmission;
an analog receiver operable to receive the analog transmission; and
an analog transmission processing unit communicatively coupled with the analog receiver and the digital network, said analog transmission processing unit being operable to convert the received analog transmission to a digitized transmission, analyze the digitized transmission to obtain the source identifying vocabulary therefrom, retrieve routing information based on the source identifying vocabulary, buffer the digitized transmission while analyzing the digitized transmission and retrieving the routing information, and associate the routing information with the buffered digitized transmission.

11. The system of Claim 10 wherein said analog transmitter comprises an analog radio transmitter and wherein said analog receiver comprises an analog radio receiver.

12. The system of Claim 10 wherein the source of the analog transmission is an individual onboard an aircraft.

13. The system of Claim 10 wherein the source of the analog transmission is a public safety officer or an emergency responder.

14. The system of Claim 10 wherein said analog transmission processing unit analyzes the digitized transmission by processing the digitized transmission with a voice recognition algorithm.

15. The system of Claim 10 wherein the voice recognition algorithm is optimized to recognize a limited range of source identifying vocabulary corresponding with at least one standardized format for an activity.

16. The system of Claim 15 wherein the limited range of standardized source identifying vocabulary includes aircraft tail numbers and aircraft operator / flight number combinations.

17. The system of Claim 10 wherein the routing information comprises a network address, and wherein said analog transmission processing unit concatenates the network address with the buffered digitized transmission to associate the routing information with the buffered digitized transmission.

18. The system of Claim 17 wherein the buffered digitized transmission comprises a plurality of packets and wherein the analog transmission processing unit concatenates the network address with each packet.

19. A system for delivering analog transmissions over a digital network, said system comprising:
means for transmitting an analog transmission including source identifying vocabulary associated with a source of the transmission;
means for receiving the analog transmission;
means for converting the received analog transmission to a digitized transmission;
means for analyzing the digitized transmission to obtain the source identifying vocabulary therefrom;
means for resolving an identity of the source of the transmission based on the source identifying vocabulary;
means for retrieving routing information based on the resolved source identity;
means for buffering the digitized transmission while said means for analyzing analyze the digitized transmission and said means for retrieving retrieve the routing information; and
means for associating the routing information with the buffered digitized transmission.

20. The system of Claim 19 wherein said means for transmitting comprise an analog radio transmitter.

21. The system of Claim 19 wherein said means for converting comprise an analog-to-digital converter.

22. The system of Claim 19 wherein said means for analyzing comprise a voice recognition algorithm.

23. The system of Claim 19 wherein said means for resolving comprise a database including vocabulary entries and corresponding source entries, said database being queried using the source identifying vocabulary.

24. The system of Claim 19 wherein said means for retrieving comprise a database including network address entries and corresponding source identities, said database being queried using the resolved source identity.

25. The system of Claim 19 wherein said means for buffering comprise a digital memory.

26. The system of Claim 19 wherein the retrieved routing information comprises a network address and said means for associating comprise a device that concatenates the network address with the buffered digital transmission.
